# EUROPEAN PATENT APPLICATION

(11) **EP 2 830 042 A1**
(43) Date of publication of application: **28.01.2015**
(21) Application number: 13400017.3
(22) Date of filing: 26.07.2013
(51) Int. Cl.: G10K 11/168, B32B 3/18, E04C 2/36

(54) **Sandwich type load bearing panel**

(71) Applicant: AIRBUS HELICOPTERS DEUTSCHLAND GmbH, 86609 Donauwörth (DE)
(72) Inventor: Fink, Axel, D-86609 Donauwörth (DE)
(74) Representative: GPI & Associés

(57) **Abstract**

The invention relates to a sandwich type load bearing panel (1) with a transversely shear stiff core (3) and a plurality of individual unidirectional plies respectively for a first and a second composite layer (2, 4), bonded each to one of the main surfaces of the core (3). The first composite layer (2) is a continuous and monolithic assembly and the second layer (4) is an open net of intercrossing strips (4a, 4b, 4c) running along at least three directions and being laid up of said plurality of individual unidirectional plies..

## Description

The invention relates to a sandwich type load bearing panel with the features of the preamble of claim 1.

In the following the term "sandwich type load bearing panel" is used with the supplemental meaning of sandwich type load bearing shell.

Sandwich panels or sandwich shells are widely used for spacecraft and aircraft design for structural components such as fuselage shells, floor panels, wing covers and control surfaces. Sandwich panels or shells are typically built of three main constituents: two thin, strong and stiff continuous cover sheets adhesively bonded to each side of a thick core which is considerably weaker and less dense than the cover sheets. This design outstands by its very high bending-stiffness-to-weight and bending-strength-to-weight ratio as well as by a smooth and even shape due to the continuous support of both skins. An additional advantage is the high thermal insulation in comparison to other designs with discrete stiffening like stringer or grid stiffened panels.

Reaching an optimal weight efficiency of composite sandwich panels or shells is often limited by a minimum feasible cover skin thickness which is a function of the minimum available ply thickness and a laminate lay-up configuration, often tailored to be more or less isotropic. Moreover, the damage tolerance of typical composite sandwich panels is known to have the risk of delaminations propagating all along the continuous core/skin interface. The acoustic damping behavior of typical composite sandwich panels is known to be insufficient.

Typical arrangements of composite sandwich panels show a symmetrical built-up of the three constituents, meaning the thickness and the laminate configuration of both continuous cover sheets are identical. In order to reach higher stiffness-to-weight ratios and higher strength-to-weight ratios, e. g. typical designs are characterized by larger load levels at the continuous outer skin in comparison to the inner skin as a result of the rampdown design and the eccentric load introduction, whilst ensuring acceptable impact and damage-tolerance capabilities, non-symmetrical arrangements are being used as well, which are characterized by a thicker outer cover skin, e. g. an aerodynamic face and a thinner inner cover skin e. g. facing to the inside of a structure. For helicopter applications both arrangements are used for structural components like fuselage panels, floor panels, tail boom and cowlings.

Some main disadvantages are related to those typical arrangements of composite sandwich panels:
- The stiffness-to-weight efficiency increases - within some margins - with increasing core height and decreasing cover sheet thickness. Too small cover sheet thicknesses reduce however the strength-to-weight ratio - especially when using honeycomb cores - as well as the damage tolerance capabilities. Too large core thicknesses further emphasize the transverse shear compliance of the sandwich panel, especially for smaller panel areas, as well as the anticlastic bending of the core. Too large core thicknesses still further reduce the strength capabilities of the cover sheets, especially for honeycomb cores. Sandwich panels with low to moderate applied in-plane load levels with predominant and driving stiffness requirements have usually thin cover sheets and relatively small core heights. Here, the maximum weight efficiency of a sandwich design often cannot be exploited due to the limitations imposed by the minimum feasible thickness of the cover sheets. The minimum feasible skin thickness is driven by the minimum available ply thickness, and the desired lay-up, usually a quasi-isotropic laminate. Quasi-isotropic laminates are characterized by a specific ply lay-up with at least three ply orientations enabling isotropic properties within the plane of the laminate. The ply is usually a preimpregnated fabric or unidirectional. A minimum skin thickness is required as well in order to avoid or minimize "telegraphing", i. e. large inter-cell deformation of the skin due to the curing pressure - in case of using a co-curing manufacturing process - and moisture absorption. Moisture absorption can be avoided however using an additional thin impermeable foil.

- The damage resistance and the damage tolerance of sandwich panels with continuous cover sheets are deficient. Especially under fatigue, acoustic, compressive and out-of-plane loading, delaminations caused by an impact tend to propagate all along the interface between the core and the cover sheets leading to important reductions of the panel's residual strength.
- Automatic manufacturing processes are gaining more and more importance in view of rising requirements for cost-efficiency, reproducibility and quality. The possibilities offered by automatic processes like Automatic Fibre Placement are not fully exploited when focusing on standard sandwich arrangements.
- The high stiffness-to-weight ratio of sandwich panels imparts superior noise transmission and hence a deficient noise insulation capability. The acoustic damping behavior of typical sandwich arrangements is deficient, hence leading to low transmission loss factors.

The document US 6179086 B1 discloses composite sandwich panels with open-meshed cover skins to improve the noise damping behavior of sandwich panels with continuous closed and solid cover skins and honeycomb cores. The mesh size of the meshed skins is considerably smaller than the dimensions of the hollow cell bodies of the honeycomb core and the meshed skins completely cover the core. An additional cover layer closes the open-meshed skin and seals the core. The outstanding noise absorption response is due to the resulting hollow chamber resonators in combination with the flexible cover skin. The open mesh of the cover skin is produced from continuous fiber bundles or rovings that cross each other and are intermeshed like a fabric. The fiber bundles hence show a very small thickness of less than one millimeter for typical core cell sizes. The manufacturing of those skins is only feasible with winding techniques using a separate pre-curing of the skins. A co-curing process of these composite sandwich panels of the state of the art, i. e. simultaneous curing of both sandwich panel skins with the core, would not be suitable, since large "telegraphing" would develop hence leading to a considerable performance reduction of these composite sandwich panels of the state of the art. Co-curing processes are however desirable in view of minimizing manufacturing costs. Moreover, a local tailoring of the mesh of these composite sandwich panels of the state of the art is only feasible by locally adding extra plies.

The document US 8236124 B1 discloses composite grid stiffened structures characterized by a lattice pattern of stiffeners which run in three to four directions crossing each other. The stiffeners typically feature a solid, monolithic rectangular cross section and are manufactured using winding techniques. The resulting shell is an open-meshed structure. Grid structures tend to be more effective in-plane and less effective out-of-plane in terms of stiffness in comparison to sandwich structures. For that reason, grid structures are preferable when longitudinal stiffness is required, for instance to increase overall bending stiffness of closed cylindrical sections, whereas sandwich designs are preferable if high plate stiffness is required, such as for stability requirements. It is known, that the damage tolerance of grid structures is better than the damage tolerance of honeycomb sandwiches, which is due to the inherent capability to contain damage, such as delamination, within one cell of a grid structure, hence limiting damage propagation and its effect on the overall strength performance of the grid structure. Due to the multi-load path characteristics of a grid structure, the load of a damaged cell can be taken over by any of the neighbouring cells.

Following disadvantages are found for typical grid structures:
- The open grid pattern requires an additional outer skin to provide for a closed and smooth aerodynamic shape. Such a skin tends however to buckle at relatively low load levels and adds additional structural weight.
- Intensive tooling effort is needed to provide for the lateral support of intercrossing stiffeners during manufacturing and curing.
- Lower plate bending stiffness to weight ratio is present in comparison to sandwich panels since material is allocated as well in the vicinity of the panel mid-plane.
- Typical grid designs are not compatible with conventional fiber placement techniques.
- Typical grid designs have crossing stiffeners with a rectangular cross section hence leading to a considerable excess of material within the intersections points leading either to excessive fiber volume fractions or to an unacceptable bulge formation at the intersection points.
- Winded grids do not allow for a local change of the stiffeners cross-section.

The document US 4052523 A discloses a composite sandwich lattice structure with multiple open honeycomb cells. A lattice-like honeycomb core is provided with multiple angular openings and with strips completely covering both faces of the honeycomb area. This configuration shows important drawbacks:
- The panel has openings. Hence, additional skins have to be used if a closed aerodynamic face is required. The implementation of an additional skin is not easy, since there is an excess of material on each intersecting point of the intercrossing strips which leads to a variation in total panel thickness. That excess has to be compensated by corresponding cavities of the honeycomb core, which means additional milling operations. The placement of material within cavities is not necessarily suitable for conventional automatic fiber placement processes.
- The honeycomb core sides of each grid cell are opened. This requires additional support means during compaction in order to avoid core crushing during curing. Moreover, the opened and free-standing sides of the honeycomb core are susceptible to environmental effects.
- The honeycomb lattice arrangement requires intensive milling operations. The placement of the weak core and its fixing, as well as the placement of the strips have to be very accurate and robust in order to have both lattice patterns, i. e. that of the skin and that of the core, coincident. This requirement leads to difficult handling characteristics. Hence, that design is considered not suitable for automatic lay-up processes.
- The noise damping behaviour of this composite sandwich lattice structure of the state of the art is not improved. The implementation of additional damping mechanisms is not possible.
- The design of this composite sandwich lattice structure of the state of the art is not suitable for structural shells enclosing a fuel tank region due to the numerous cavities of the opened lattice design.

The document US 2006/0208135 A1 discloses noise and vibration reduction using the constrained layer damping effect. Patches of viscoelastic material sandwiched between a constraining layer, typically metallic and the structural element dissipate vibrational energy by viscoelastic transverse shear motion.

The document WO2012171921 discloses a method for producing a composite comprising two skins made of a composite material adhered onto either side of a core provided in the form of a honeycomb panel, wherein the method comprises a step of firing the skins on the core in order to simultaneously achieve the curing of the skins and the adhesion of the skins to the core. The method involves placing a stiffening layer between the core and at least one skin. The stiffening layer is just an assembly of parallel fibre layers.

The document EP-465719 A2 discloses a flat product with honeycomb structure, such as a honeycomb core for laminated or sandwich articles. Honeycomb cells are closed at least on one side by an outer layer, the latter is a thermoplastic sheet or film deformed (pneumatically) in the softened state in each case into the honeycomb cells by under pressure or over pressure until in a form fit with the cell wall.

The document DE 10 2004 056 333 A1 describes a building material with an outer element, a middle thicker element and a grid-like inner element and not a sandwich structure. The outer element of said state of the art is a flexible foil not providing for any load bearing capabilities but just covering the middle element, which is just a thicker isolation material not load carrying either. The main load bearing element of said state of the art is the grid-like meshed element alone. Hence, said state of the art does NOT disclose a sandwich construction, as a sandwich always has two load bearing skins and a central core connecting said two load bearing skins. To be load bearing, the skins have to have some effective stiffness and strength, and the core has to have transverse shear stiffness. Several of the core materials cited in the description of said state of the art are not load bearing. Honeycombs as core materials are not addressed ... because they are not optimal in terms of heat and noise isolation. The intention of DE 10 2004 056 333 A1 is to have just a core material with heat and/or noise insulation properties, but load bearing properties are of no relevance. The description of DE 10 2004 056 333 A1 states, that the flexible foil is only there to ease fabrication and to protect the isolation core from environmental effects. Hence, DE 10 2004 056 333 A1 discloses a "material" with limited stiffness capabilities, especially bending stiffness, said material is not a structural element.
- DE 10 2004 056 333 A1 discloses, that the isolation material covers at least partially the meshed element. Thus the isolation material of DE 10 2004 056 333 A1 is just an "additive" to the meshed material and not an indispensable constituent as it would be in a sandwich.
- DE 10 2004 056 333 A1 discloses, that the meshed element is made of intercrossing metal rods or wires, perpendicularly crossing each other. This, again, shows that there is no mechanical, load-bearing link intended and realized between the meshed element and the flexible foil, as would be the case in a sandwich construction: the small surface of a rod is not enough to provide for a stiff link and the mechanical interaction to the core is poor. Moreover, the bi-axiality of the mesh does not provide for sufficient in-plane shear stiffness, which is necessary for a structural element for aircraft applications.
- The outer element of DE 10 2004 056 333 A1 is a flexible skin. Thus there are no solid and stiff outer faces of the material of DE 10 2004 056 333 A1 as would be needed for any structural element subject to air-loads, hail, impact,...

The objective of the present invention entails the improvement of the weight efficiency of a composite sandwich type load bearing panel or shell by overcoming the above limitations and providing for a structural sandwich element with high specific stiffness and strength capabilities, especially high specific bending stiffness, using composite materials. It is a further objective of the invention to enable an effective and easy implementation of additional damping mechanisms and an associated noise attenuating characteristic for a sandwich type load bearing panel or shell. Furthermore, the invention is intended to provide for a sandwich type load bearing panel or shell design especially suited for automatic fibre placement techniques.

A solution for the objective of the present invention is provided with a composite sandwich type load bearing panel or shell with the features of claim 1. Preferred embodiments of the invention are presented with the dependent subclaims.

According to the invention a sandwich type load bearing panel comprises a shear stiff core with two main surfaces opposed to each other and a first and a second fibre reinforced composite layer respectively bonded each to one of the main surfaces of the core, said first and said second composite layer being made of a plurality of individual unidirectional plies. The unidirectional ply is made of carbon, glass or aramid fibres preimpregnated with a thermoset or thermoplastic resin where all fibres show a single orientation. The first composite layer is a continuous and monolithic assembly of said plurality of individual unidirectional plies. The second layer is an open net of intercrossing strips running along at least three directions. Each individual strip is laid up of said plurality of individual unidirectional plies which are oriented along the individual strip's direction i. e. the plies of one specific strip are oriented along the direction of this specific strip, and not along the direction of any of the other strips. Each of said strips have a constant width along one of said at least three directions, the strips have a width-to-thickness ratio of 5 to 60, a minimum width of 6 mm and a thickness of 0.2 mm to 3.5 mm. The strips of equal direction are separate from each other by a distance of 3 to 10 times their width. The core is shear stiff transversely with a transverse shear modulus > 10 MPa and the core has between the two main surfaces a uniform thickness, meaning a constant thickness or a slightly variable thickness with thickness slopes less than 1 to 20, i. e. 1 mm in thickness per 20 mm in the plane, along the interfaces of the strips with the one of the two main surfaces over an area enclosing along each of said at least three directions respectively at least five strips of the same direction. The inventive sandwich type load bearing panel is covered with two different faces, i. e. one-side of the shear stiff core is covered with an open meshed composite layer and the side opposed to said one-side of the shear stiff core is covered with a continuous and monolithic composite cover layer. The invention is characterized by the following features:
- The suggested sandwich design features a first continuous and monolithic cover layer, a core and a second open-meshed layer. Both of said first continuous, monolithic and said second open-meshed layers are made of fibre reinforced plastics. Both layers are bonded to the core, particularly with an additional film adhesive layer. In a first embodiment, the core is uniformly continuous, i. e. there is no recess of material and the core thickness is constant; in a second embodiment the core is structured having blind indentations within those core areas uncovered by the strips of the mesh layer, meaning recesses to a specific core depth without breaking through to the other side, i. e. the side with the continuous cover layer of the panel. The first continuous cover layer corresponds to an outer panel skin providing for a smooth aerodynamic face. The thickness of this first continuous cover layer is chosen according to the minimum thickness requirements for material availability, damage tolerance, impermeability, strength and further aspects related to typical sandwich designs. The smoothness of the outer first continuous cover layer is guaranteed amongst other by the continuous support of the core. The second open-meshed layer is the inner layer of the inventive panel facing the interior of a structure, which is often as well the source of the noise. The second open-meshed layer principally has a stabilizing effect for the outer layer.
- The second open-meshed layer is made of intercrossing strips of unidirectional plies, the strips having a width-to-thickness ratio of 5 to 60, a minimum width of 6 mm and a maximum thickness of 0.2 mm to 3.5 mm. The orientation of the unidirectional plies of each strip is parallel to the corresponding strip's longitudinal extension. The strips of the same orientation have a ratio of the separation distance of the strips to each other to the strip width of 3 to 10 with the consequence that the inventive panel features an inner face with polygonal areas of core which are not covered by the strips, i. e. the inventive panel has "mesh pockets" on its inner face. The strips can be made by stacking of a plurality of individual unidirectional plies in width and thickness direction of the respective strip cross-sections.
- Facing bending stiffness requirements, a weight optimal sandwich configuration requires layers thicknesses which are so thin that they cannot be physically produced. This is due to the minimum available unidirectional ply thickness - the total layer thickness hence resulting in a multiple of that minimum ply thickness - and handling, quality and strength requirements. Hence, typical sandwich panels are for some applications less weight efficient than they could be. The inventive panel allows reaching the optimum theoretical weight efficiency and overcoming the above limitations by concentrating the material of the theoretical optimal continuous layer into discrete flat strips running along different directions. The thickness of the strips results then to be much thicker than the thickness of the theoretical continuous layer and hence physically feasible. The design of the meshed layer is accomplished in the way to ensure the smeared properties being equivalent to the theoretical optimal continuous layer. Moreover, the use of larger ply thicknesses improves the strength capabilities and the laminate quality. To entail a quasi-isotropic behaviour to the inventive panel, there should be preferably three different orientations of the strips, namely 0°/+60°/-60° relative to an axis along the main surfaces of the core. The strip thickness and the mesh size are identical for all three orientations. However, it is a big advantage of the inventive sandwich type load bearing panel to have the possibility to tailor the orientations and the cross section of the strips in contrast to winded lay-ups. As a result of the meshed design of the second layer of the sandwich type load bearing panel, it is possible to achieve an optimal and weight efficient sandwich design at the expense of a slightly larger core thickness. As an example, the weight of a symmetric sandwich with 15 mm core height and two quasi-isotropic layers with a thickness of 0.736 mm each, namely 4 plies each with a thickness of 0.184 mm per layer, can be reduced by 15% having a layer thickness reduced by 65% to 0.257 mm. Since this reduced thickness is not feasible, the meshed design allows having the same smeared properties by using a mesh with strips oriented at 0°/60°/-60° with a strip width to mesh distance of 15%, three plies per each strip, and a core height 40% larger than the reference. The weight reduction of the meshed design reaches the theoretical 15%. The inventive panels have demonstrated a typical weight reduction potential of about 10% compared to the weight of a feasible symmetric sandwich with two quasi-isotropic layers and a comparable bending stiffness.
- The inventive sandwich type load bearing panels combine the advantages of typical grid designs with the advantages of typical sandwich designs. The damage tolerance of the inner meshed layer is improved taking advantage of the multi-load-path characteristics and the delamination retention capabilities of discrete stiffening, whereas the outstanding bending-stiffness-to weight ratio of sandwich structures is exploited.
- Exclusively the inner layer of the inventive sandwich type load bearing panel is meshed while the outer layer is smooth. The excess of material at each intersection node of the inner layer is of no concern for the aerodynamic properties of the inventive
   panel since they extend towards the inside of the structure. Being the thickness of the strips thin, e. g. 0.2 to 3.5 mm but typically 0.3 to 0.6 mm, the excess of material at each node does not give any relevant concern in terms of manufacturability or mechanical capabilities.
- The design of the inventive sandwich type load bearing panel is perfectly suited for Automatic Fibre Placement processes. The first continuous layer can be automatically laid up on a mandrel. After placing the continuous layer on to one of the main surfaces of the core the strips for the second meshed layer can be automatically placed on the main surface opposed to the one main surface of the core with a fiber placement head. According to an advantageous feature allowed by the inventive sandwich type load bearing panel the strips of the second layer are laid up by automatic fiber placement procedures with the following steps: g.: Providing the shear stiff core with two main surfaces opposed to each other, h.: Providing a number of M of individual unidirectional plies for a number of N intercrossing strips, i.: Placing consecutively one individual unidirectional ply respectively for each of the 1 to N intercrossing strips on one of the two main surfaces of the shear stiff core and on top of any of the individual unidirectional plies of the intercrossing strips laid before, and j.: Repeating the steps i. M-1 times till completion of the N intercrossing strips. Preferably the number of intercrossing strips is N = 3. The top cover layer can be finally laid up manually on top of the second meshed layer. Any ramped edges of the inventive panel are finally closed by additional layers, e. g. manually applied, said additional layers forming a continuous frame and coupling the outer continuous layer to the meshed layer.

According to a further improved embodiment of the invention a sealing of the inner panel face over the "mesh pockets" is accomplished by using an additional top cover ply with a small area weight of less than 160 g/m², preferably a glass fibre reinforced plastic layer with continuous or short fibres, a reinforced or non-reinforced thermoplastic foil or a elastomeric layer. Preferably the second layer is entirely covered by the top cover ply with a nominal thickness equal or less the strip thickness. Even considerable "telegraphing" of the top cover ply within the open angular areas is not considered a concern, since the top cover ply has no load bearing functions. However, besides its hermetic function, the top cover ply provides for sufficient stabilization of the first outer continuous layer within the pocket areas.

According to a still further improved embodiment of the invention the core is made of a cellular material, such as metallic or composite honeycomb or the core is made of a monolithic material such as foam. In the preferred embodiment of the invention the core is a honeycomb.

According to a still further improved embodiment of the invention the mesh size of the second layer is considerably larger, at least 2 times but typically more than 30 times larger than the dimensions of the hollow cell bodies of a typical honeycomb core. A mesh size of the second layer of 100 mm would be a typical size. The dimensions of the hollow cell bodies would be typically around 3 mm.

According to a still further improved embodiment of the invention individual angular ply pieces made of a fibre reinforced composite material with fibers, of a thermoplastic layer or elastomeric layer cover the main surface of the core between the strips of the second layer to improve the damping effect of the panel by implementing viscoelastic layers on each angular field of the inner meshed skin which is not covered by the load bearing strips ("mesh pockets"). The top cover ply can be then placed on top of both the strips and the additional viscoelastic layer, or the top cover ply can be the viscoelastic layer itself. This embodiment of the inventive sandwich panel provides two advantageous damping effects: core shear motion provided within the open angular areas due to the low stiffness of the top cover ply on the one hand and the noise absorption effect of a plurality of individual resonators provided by the core cells covered by a flexible membrane on the other hand. Core shear motion is expected to provide for damping at different frequencies as the hollow cell resonators. Hence, this inventive sandwich panel is able to easily provide for damping within a broad band of frequencies without having any negative impact on the overall stiffness behavior of the panel: global behavior is decoupled from the local damping behavior. Core shear motion is effective even for foam cores, whereas the resonator effect is effective for cellular cores only. Of course, the top laver and/or the viscoelastic layer can be perforated, but it is not recommendable for any inventive sandwich panels of aircraft structures in view of several environmental influences.

Nevertheless, the improved damping behaviour of the inventive sandwich panel results in an increase of panel weight. Considering however the improvement of the global weight efficiency resulting from the meshed design, the inventive sandwich panel can be achieved with neutral weight efficiency but with a considerably better damping behavior.

According to a still further improved embodiment of the invention the open net of intercrossing strips forms equal sized meshes.

According to a further improved embodiment of the invention the strips of the second inner layer of the sandwich type load bearing panel is provided with controlled interruptions of the plies at the nodal points. At the controlled interruptions continuous and interrupted plies are alternatively laid up in one of the at least three directions for each strip. Hence each of the intercrossing strip is made with interrupted plies of a strip covered by continuous plies. Only the continuous plies of the intercrossing strips overlap each other, while the interrupted plies join laterally said continuous plies. Said continuous plies of a strip bridge the gap of the interrupted plies above and below of said continuous plies thus providing for strength and stiffness continuity along each of the strips through each nodal point. However, some diminution of the strength of the inventive sandwich type load bearing panel, i. e. not necessarily the stiffness, results from the individual ply interruptions in the strips at each nodal point to avoid full overlapping of the strips and the resulting material excess in the nodal points.

According to a further improved embodiment of the invention the core is shear-stiff and continuous having between the two main surfaces a constant thickness over an area enclosing along each of said at least three directions respectively at least five strips of the same direction.

According to a further improved embodiment of the invention the core is shear stiff and structured having a constant thickness along the contacts with the strips of the second inner composite layer and for an improved weight-stiffness relationship the structured shear stiff core is provided with a blind indentation at each of the mesh pockets of the inner meshed layer between the strips.

According to a further improved embodiment of the invention said indentations are essentially triangular with a remaining minimum thickness with the ratio q of constant thickness to minimum thickness being 1 < q < 10.

A constant core thickness increases the panel weight but reduces manufacturing work and costs and allows for an easy hermetization of the panel. Structured cores are more expensive and difficult to handle and hermetize but are the lightest design.

The inventive sandwich panel overcomes the efficiency limitations of typical sandwich designs and the manufacturing limitations of typical grid designs.
a. The invention provides for structural mass savings in comparison to typical sandwich designs with continuous skins of the state of the art. The inventive sandwich panel achieves these savings by overcoming the layer thickness limitations on the one hand, and/or improving the strength limitations on the other hand.
b. The invention enables an easy integration of effective damping mechanisms without influencing the global stiffness of the inventive panel hence improving the acoustic insulation properties of sandwich panels.
c. The invention represents a design which is compatible with standard automatic fiber placement processes.
d. The invention provides for improved damage tolerance behaviour of sandwich panels.

A preferred embodiment of the invention is described by means of the following description with reference to the attached drawings.
Fig. 1 shows a general view of a sandwich panel according to the invention,
Fig. 2 shows a cross sectional view at an enlarged scale of a sandwich panel according to the invention,
Fig. 3 shows an exploded perspective view of a further sandwich panel according to the invention,
Fig. 4 shows an exploded perspective view of a still further sandwich panel according to the invention,
Fig. 5 shows a cross sectional view at an enlarged scale of said still further sandwich panel according to the invention,
Fig. 6 shows a schematic top view of a section of the sandwich panel and a cross sectional view at an enlarged scale of a subsection of said sandwich panel according to the invention,
Fig. 7 shows a schematic top view of a section of an alternative sandwich panel according to the invention,
Fig. 8 shows a cross sectional view at an enlarged scale of an alternative sandwich panel according to the invention,
Fig. 9 shows a cross sectional view at an enlarged scale of a further alternative sandwich panel according to the invention,
Fig. 10 shows a perspective view of a section of a sandwich panel with a cellular core according to the invention,
Fig. 11 shows a perspective view of a section of a sandwich panel with a foam core according to the invention,
Fig. 12 shows a perspective view of a sandwich panel with a ramp area according to the invention,
Fig. 13 shows a perspective exploded view of the sandwich panel with a ramp area of Fig. 10,
Fig. 14 shows a perspective exploded view of plies of intercrossing strips of the sandwich panel according to the invention,
Fig. 15 shows a perspective view of an alternative sandwich panel with a foam core according to the invention,
Fig. 16 shows a cross sectional view of a section of the alternative sandwich panel with a foam core according to Fig. 15, and
Fig. 17 shows an exploded view of the alternative sandwich panel with a foam core according to Fig. 15.

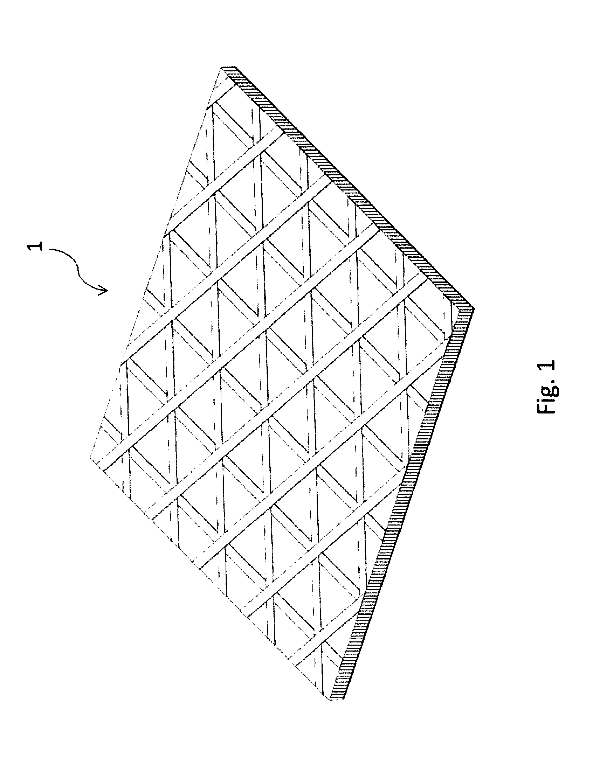

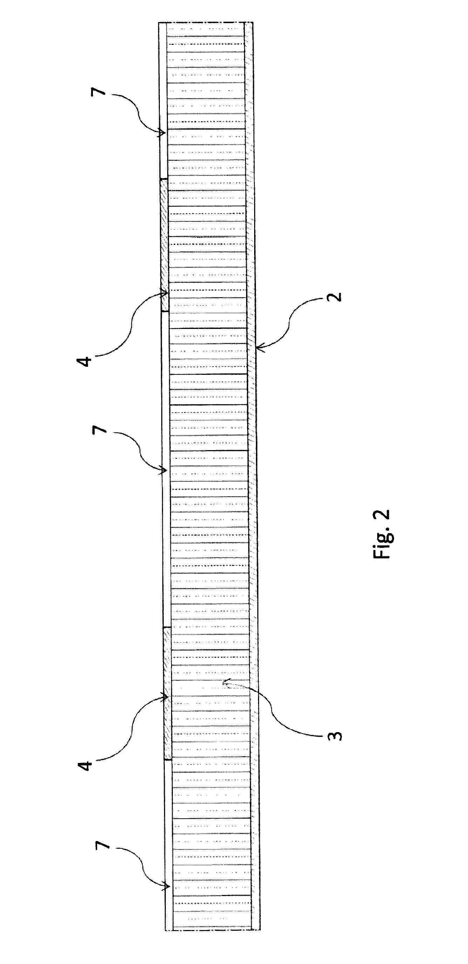

According to Fig. 1, 2 a sandwich type load bearing panel 1 comprises a shear stiff core 3 with two main surfaces opposed to each other. The shear stiff core 3 is made of a cellular material, such as a metallic or a composite honeycomb. The shear stiff core 3 has a uniform thickness, meaning either a constant thickness or a slightly variable thickness with thickness slopes less than 1 to 20, i. e. 1 mm in thickness per 20 mm in the plane along the interfaces of the strips with the one of the two main surfaces A first outer and a second inner composite layer 2, 4 are respectively bonded to one of the main surfaces of the core 3. The first outer composite layer 2 is continuous and monolithic. The second inner layer 4 is an open net of equal sized meshes with uncovered mesh pockets 7.

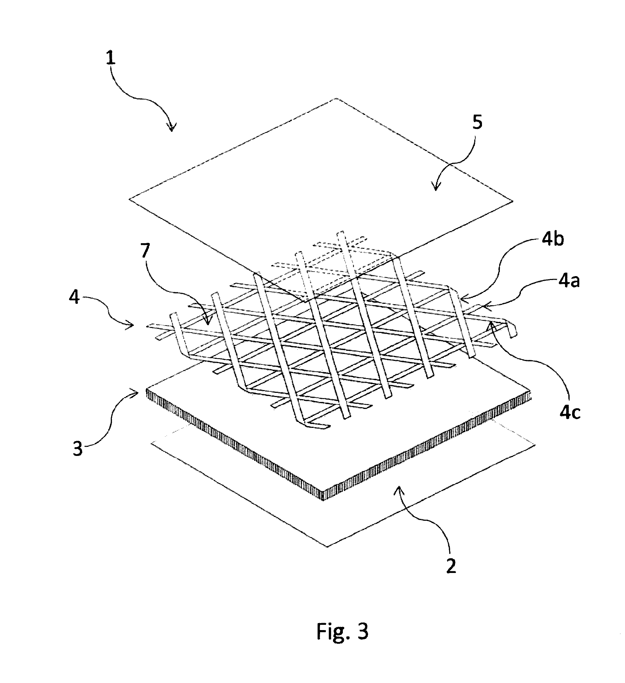

According to Fig. 3 corresponding features are referred to with the same references of Fig. 1, 2. The sandwich type load bearing panel 1 has the core 3 between the first outer continuous layer 2 and the meshed inner layer 4. The core 3 is continuous, i. e. the core 3 is made of a cellular material without openings or recesses larger than any of the material cell openings along any of its two main surfaces opposed to each other.

On top of the meshed inner layer 4 is a top cover ply 5. The outer layer 2 and the meshed inner layer 4 are both bonded respectively to one of the main surfaces of the core 3. The core 3 has a constant height throughout an area enclosing along each of said at least three directions respectively seven strips (4a, 4b, 4c) of the same direction of the panel 1.

The meshed inner layer 4 is made of intercrossing strips 4a, 4b and 4c, oriented in three main directions. The width of the strips is smaller than the distance between each parallel strips, which results in the formation of mesh pockets 7. The strip width is considerably larger than the cell dimensions of the cellular core, i. e. the cross-sectional dimensions of the individual hollow cell bodies are at least two times smaller than the strip width. The top cover ply 5 covers entirely the meshed inner layer 4, said top cover ply 5 being thus connected to the strips 4a, 4b and 4c and to the portions of the core 3 not covered by the strips.

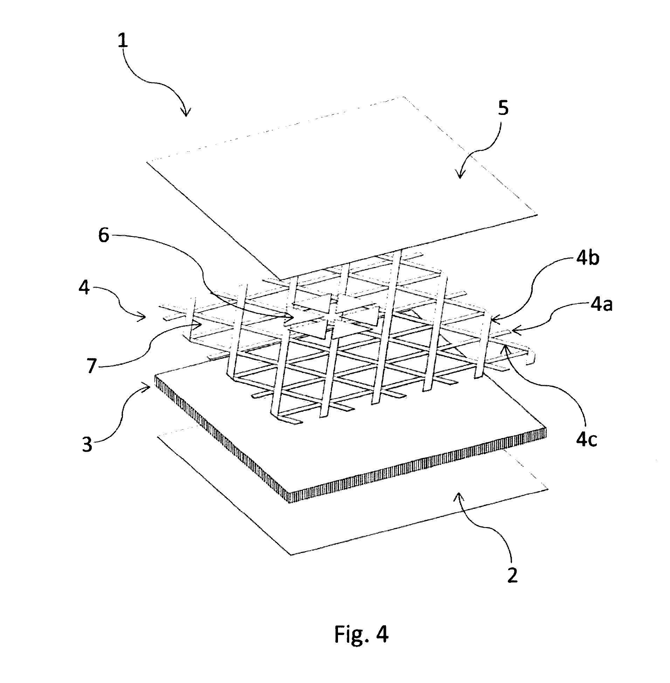

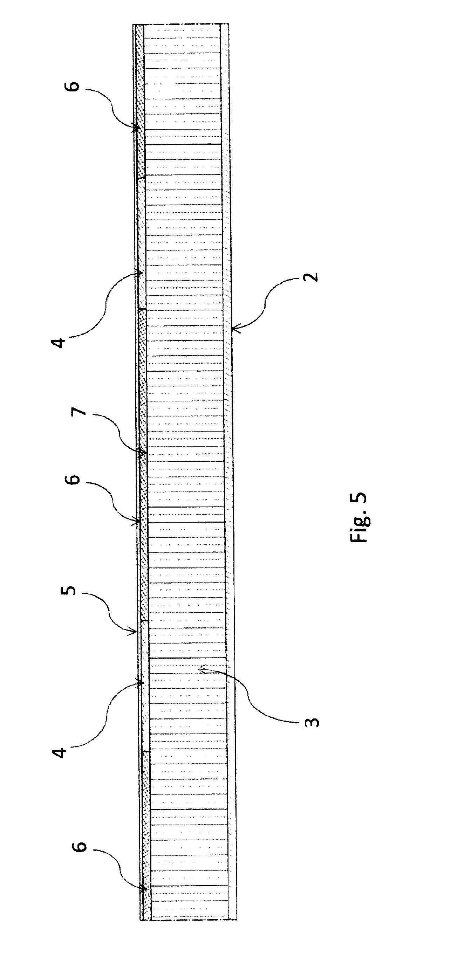

According to Fig. 4, 5 corresponding features are referred to with the same references of Fig. 1-3. A still further sandwich type load bearing panel 1 includes damping ply elements 6 covering individually mesh pockets 7 of the inner meshed layer 4 between the strips 4a, 4b and 4c. Said damping ply elements 6 are bonded to the core 3 in said mesh pockets 7. The top cover ply 5 covers the strips 4a, 4b and 4c and the damping ply elements 6. Hence the top cover ply 5 is connected to the strips 4a, 4b and 4c and the damping ply elements 6.

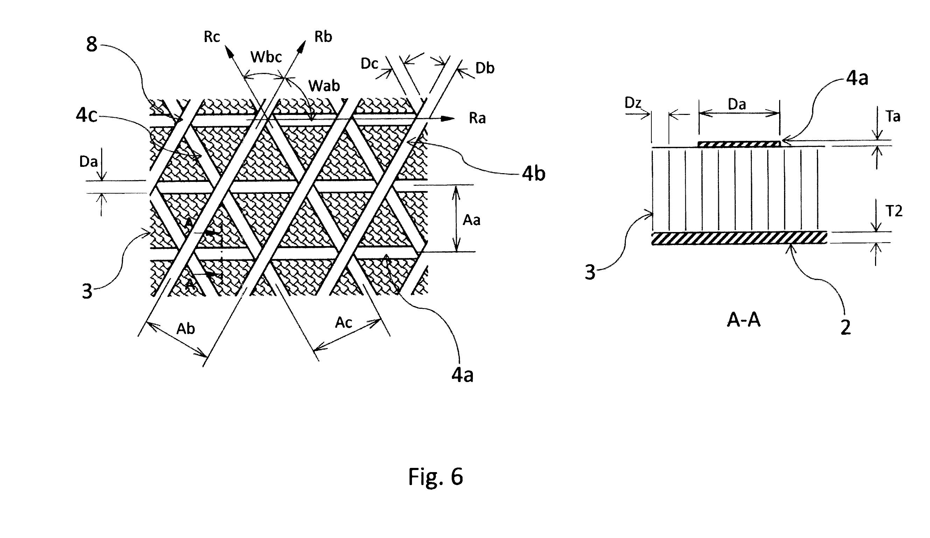

According to Fig. 6 corresponding features are referred to with the same references of Fig. 1-5. The sandwich type load bearing panel 1 is provided with the inner meshed layer 4 with common nodal points 8 for all of the strips 4a, 4b and 4c oriented in three directions Ra, Rb, Rc The directions Ra and Rb are inclined by an angle Wab to each other, and the directions Rb and Rc are inclined to each other by an angle Wbc. The angle Wab is in the range between 30° and 90°. The angle Wbc is in the range between 45° and 75°. The strips 4a, 4b and 4c have a width Da, Db and Dc and a thickness Ta, Tb and Tc respectively. For quasi-isotropic behavior both angles Wab and Wbc amount to 60° and the widths D and thicknesses T of each strip 4a, 4b and 4c are identical. For anisotropic behavior, the angles Wab and Wbc, as well as the thicknesses and widths of each strip 4a, 4b and 4c are easily tailorable. The strips 4a, 4b and 4c of the same orientation have a distance Aa, Ab and Ac to each other. The width Da, Db and Dc of each strip is a fraction of these distances Aa, Ab and Ac.

The shear stiff core 3 is made of the cellular material, such as the metallic or the composite honeycomb. The cross sectional dimension Dz of an opening of a cell body of the core 3 is a fraction of the strip widths Da, Db and Dc. The minimum strip width amounts to 6 mm. The strips 4a, 4b and 4c intersect each other at the common nodal point 8. The individual plies of the strips 4a, 4b and 4c intersecting at the common nodal point 8 overlap each other, hence generating a larger resulting thickness, i. e. at least three times as thick as the individual thickness of the strip. The resulting local increase in thickness provides for the feature of a crack arrester for the inner meshed layer 4 on the inner surface of the shear stiff core 3

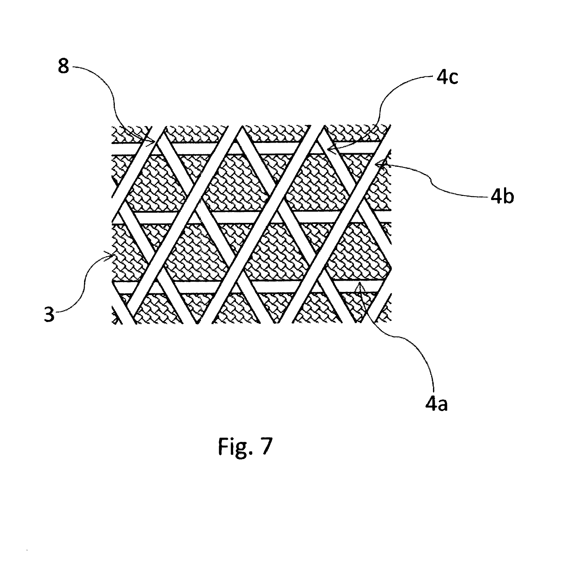

According to Fig. 7 corresponding features are referred to with the same references of Fig. 1-6. The sandwich type load bearing panel 1 is provided with strips 4a of one orientation being slightly transversally shifted relative to the other strips 4b and 4c of the other two orientations so as to avoid all three strips 4a, 4b and 4c overlapping at the common nodal points 8, but instead having overlap only for the two strips 4b and 4c at the common nodal points 8, hence reducing the material pad-up at the common nodal points 8 on the inner surface of the shear stiff core 3, made of cellular material, such as a metallic or a composite honeycomb.

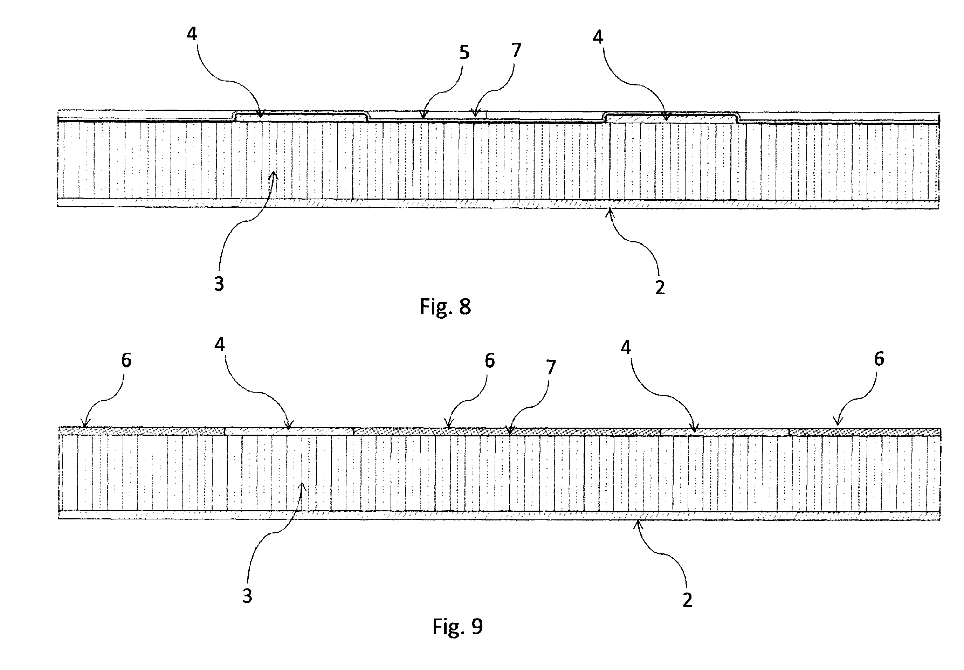

According to Fig. 8 corresponding features are referred to with the same references of Fig. 1-7. The sandwich type load bearing panel 1 is provided with the outer continuous layer 2, the core 3, the strips 4 of the inner meshed layer 2 and the top cover ply 5. An adhesive film connects the core 3 to the layers 2, 4 and to the top cover ply 5 in the mesh pockets 7 between the strips.

According to Fig. 9 corresponding features are referred to with the same references of Fig. 1-8. The sandwich type load bearing panel 1 is provided with the additional damping ply elements 6 covering the core 3 in the mesh pockets 7 between the strips 4.

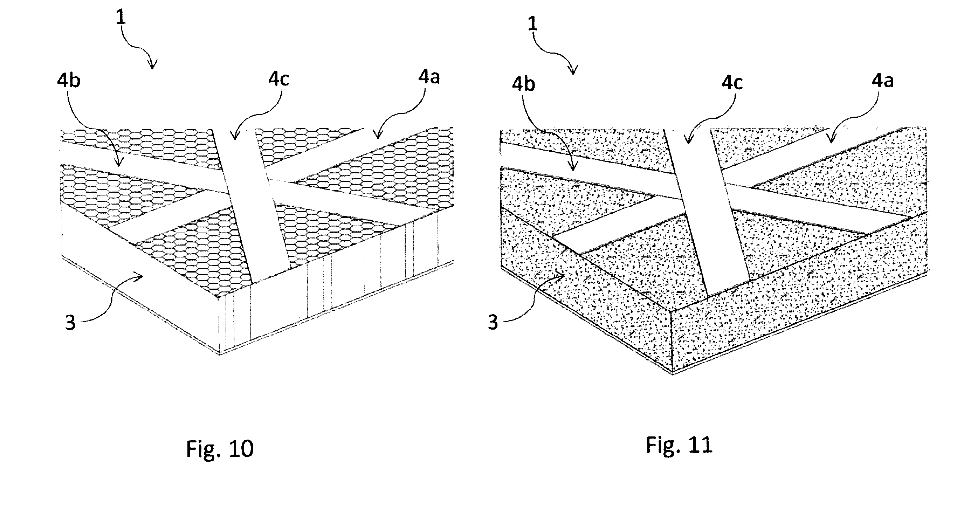

According to Fig. 10 corresponding features are referred to with the same references of Fig. 1-9. The sandwich type load bearing panel 1 is provided with the strips 4a, 4b, 4c of the inner meshed layer 4 covering the core 3 made of honeycomb as cellular material with the openings of the cells of the honeycomb oriented towards the two main surfaces opposed to each other.

According to Fig. 11 corresponding features are referred to with the same references of Fig. 1-10. The sandwich type load bearing panel 1 is provided with the strips 4a, 4b, 4c of the inner meshed layer 4 covering the core 3 made of foam without openings at the two main surfaces opposed to each other.

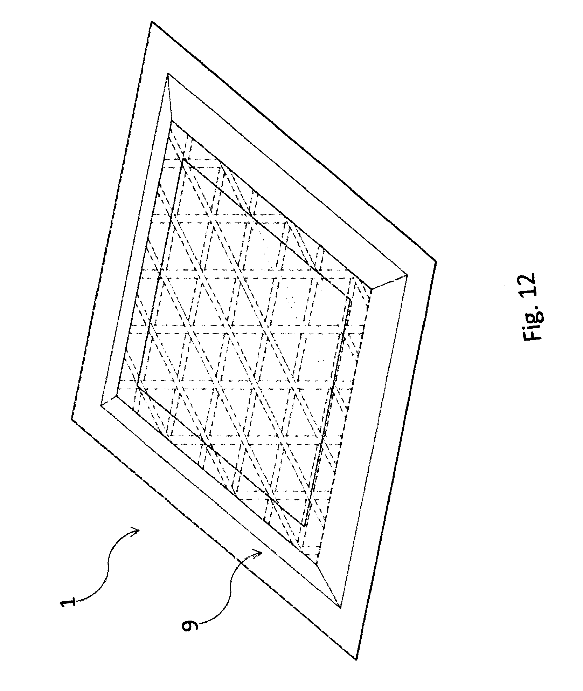

According to Fig. 12 corresponding features are referred to with the same references of Fig. 1-11. The sandwich type load bearing panel 1 is provided with a ramp area and a frame 9 made of additional composite plies, closing the edges of the panel 1 and connecting the meshed inner layer 4 with the continuous outer layer 2.

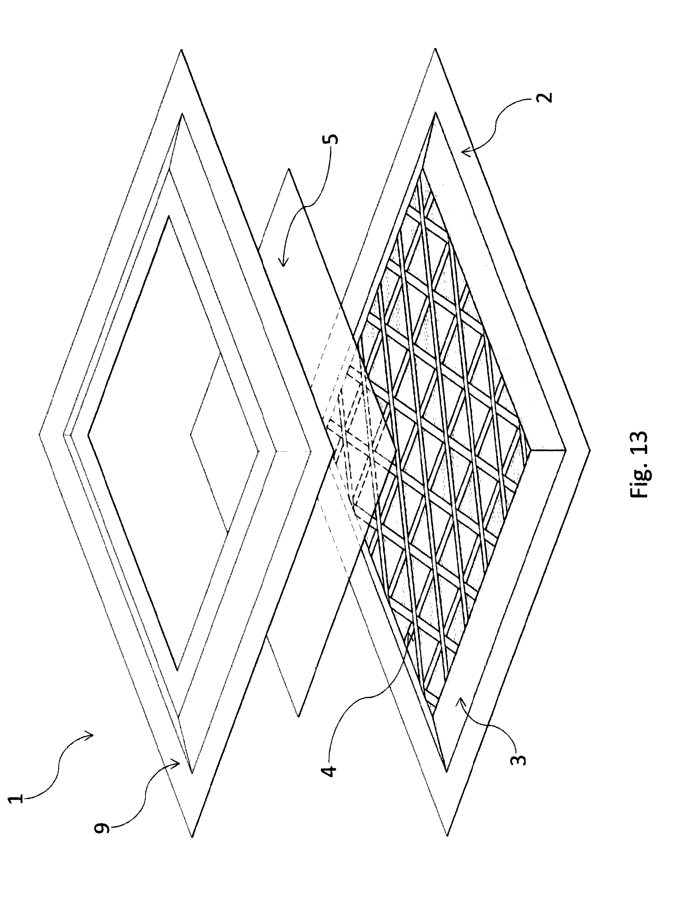

According to Fig. 13 corresponding features are referred to with the same references of Fig. 1-12. The sandwich type load bearing panel 1 is provided with the ramp area of the core 3. A portion of the inner meshed layer 4 and a portion of the top face of the core 3 are covered by the frame 9 made of additional composite plies. The frame 9 closes the edges of the panel 1 and connects the strips of the meshed inner layer 4 to the continuous outer layer 2.

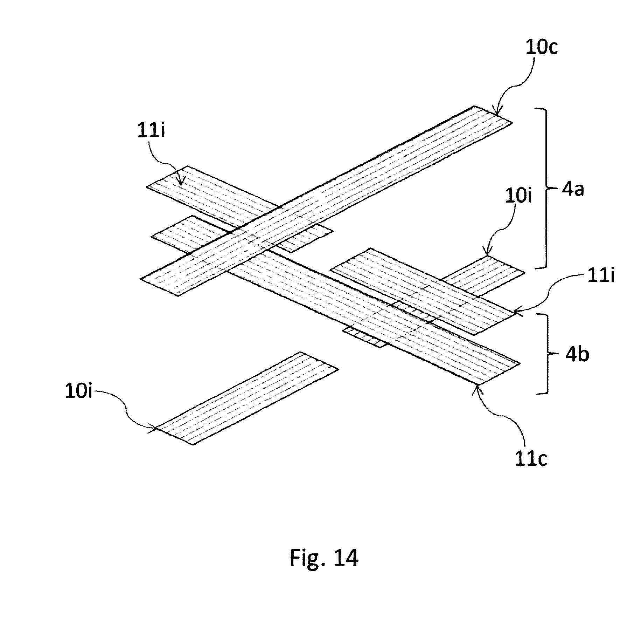

According to Fig. 14 corresponding features are referred to with the same references of Fig. 1-13, showing the controlled ply interruption strategy for an exemplary case of two intercrossing strips. Strips 4a, 4b of the second inner meshed layer 4 of the sandwich type load bearing panel 1 are provided with controlled interruptions of their respective plies 10, 11 at the nodal points 8. At the nodal points 8 continuous plies 10c, 11c and interrupted plies 10i, 11i are alternatively laid up in one of the at least three directions for each of said strips 4a, 4b for controlled interruptions. The strip 4a is made with interrupted plies 10i covered by a continuous ply 10c. The intercrossing strip 4b is made with interrupted plies 11i covered by a continuous ply 11c. Only the continuous plies 10c, 11c of the intercrossing strips 4a, 4b overlap each other at the nodal points 8. The interrupted plies 10i, 11i join laterally said continuous plies 10c, 11c at the nodal points 8. Said continuous plies 10c of strip 4a bridge the gap formed by the intercrossing strip 4b between the interrupted plies 10i of strip 4a, while said continuous plies 11c of intercrossing strip 4b bridge the gap formed by the strip 4a between the interrupted plies 11i of the intercrossing strip 4b. A plurality of alternating continuous and at nodal points 8 interrupted plies above and below each other form each strip.

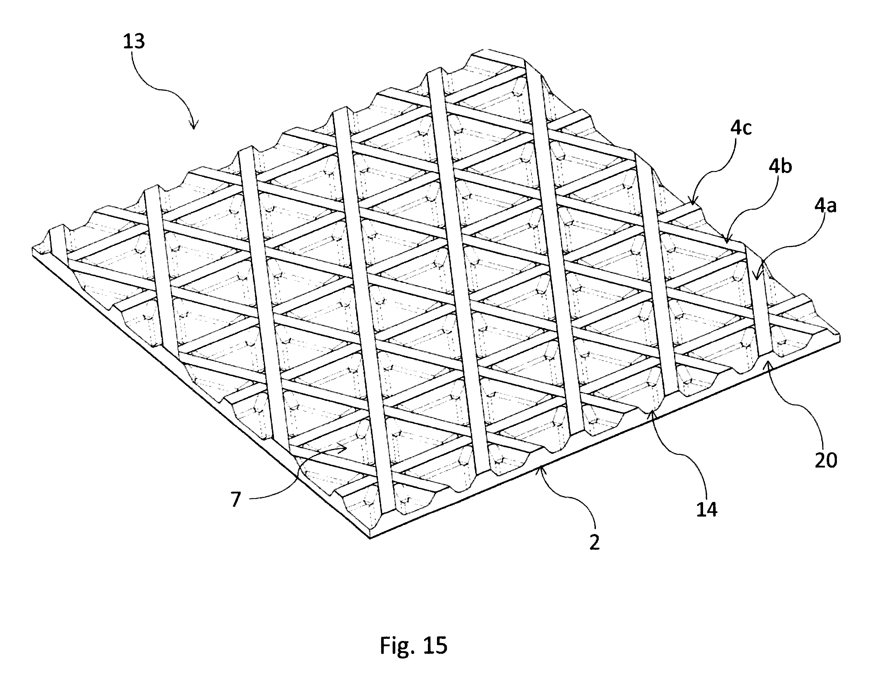

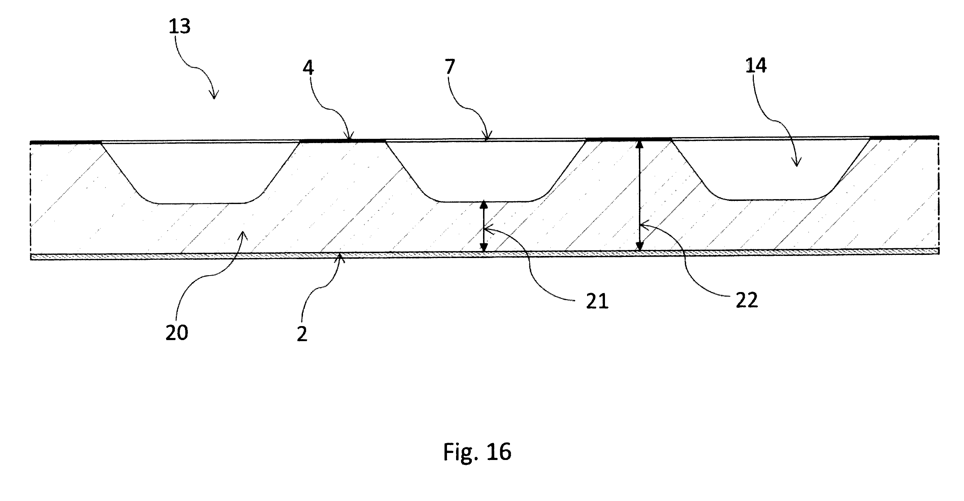

According to Fig. 15, 16 corresponding features are referred to with the same references of Fig. 1-14. A structured sandwich type load bearing panel 13 comprises a structured shear stiff core 20 with two main surfaces opposed to each other. The structured shear stiff core 20 is made of foam with a constant thickness 22 along the contacts of the strips 4a, 4b, 4c of the second inner composite layer 4 respectively bonded to the inner main surfaces of the structured shear stiff core 20. The opposed outer main surface of the structured shear stiff core 20 is continuous. The first outer composite layer 2 is continuous and monolithic. The second inner layer 4 is an open net of equal sized meshes with uncovered mesh pockets 7.

The structured shear stiff core 20 is provided with an indentation 14 which is a blind recess going through a portion of the core thickness 22 at each of the mesh pockets 7 of the inner meshed layer 4 between the strips 4a, 4b and 4c. Said indentations 14 are essentially triangular in a projection plane common with the main surfaces. Said indentations 14 have a remaining minimum thickness 21. The ratio q of constant thickness 22 to minimum thickness 21 is 1 < q < 10.

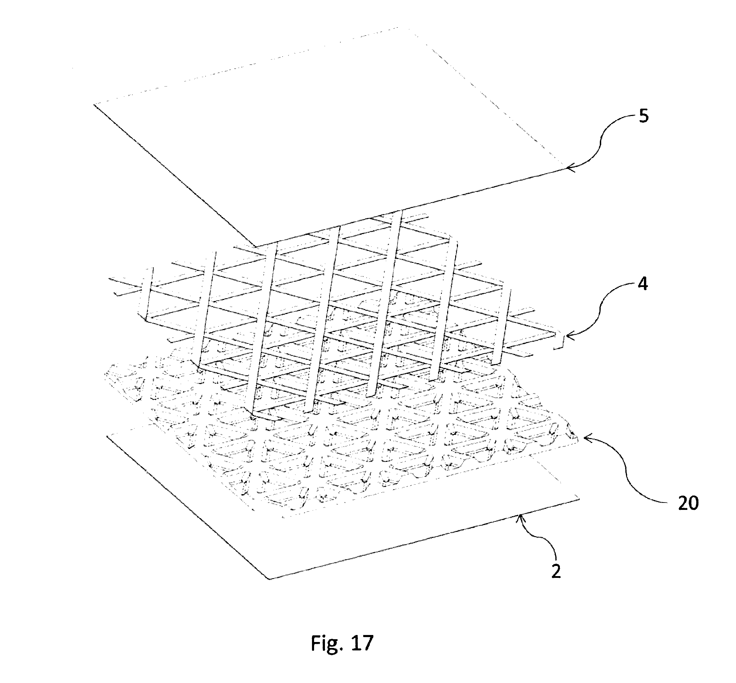

According to Fig. 17 corresponding features are referred to with the same references of Fig. 1, 16. The structured sandwich type load bearing panel 13 has the structured shear stiff core 20 between the first outer continuous layer 2 and the meshed inner layer 4. The structured shear stiff core 20 is made of a foam material.

On top of the meshed inner layer 4 is a top cover ply 5. The outer layer 2 and the meshed inner layer 4 are both bonded respectively to one of the main surfaces of the structured shear stiff core 20. The structured shear stiff core 20 has a constant height along the strips 4a, 4b, 4c of the structured sandwich type load bearing panel 13.

The meshed inner layer 4 is made of intercrossing strips 4a, 4b and 4c, oriented in three main directions. The width of the strips is smaller than the distance between each parallel strips. The strip width is considerably larger than the cell dimensions of the cellular core, i. e. the cross-sectional dimensions of the individual hollow cell bodies are at least two times smaller than the strip width. The top cover ply 5 covers entirely the meshed inner layer 4, said top cover ply 5 being thus connected to the strips 4a, 4b and 4c.

### Reference List

1. Sandwich type load bearing panel
2. First Continuous outer layer
3. Continuous core
4. Second Meshed inner layer
4a. 4b. 4c. Strips
5. Top cover ply
6. Damping ply element
7. Mesh pocket
8. Common Nodal point
9. Ramp frame
10. Plies
11. Plies
13 Structured sandwich type load bearing panel
14 indentation
20 structured core
21 core thickness
22 minimal thickness

## Claims

1. A sandwich type load bearing panel (1, 13) with
- a shear stiff core (3, 20) with two main surfaces opposed to each other,
- a plurality of individual unidirectional plies (10c, 10i, 11c, 11i) of fibre reinforced plastic respectively for a first and a second composite layer (2, 4), bonded each to one of the main surfaces of the shear stiff core (3, 20),
Wherein
- the first composite layer (2) is a continuous and monolithic assembly of said plurality of individual unidirectional plies (10c, 11c),
- the second layer (4) is an open net of intercrossing strips (4a, 4b, 4c) running along at least three directions, each intercrossing strip (4a, 4b, 4c) is laid up of said plurality of individual unidirectional plies (10c, 10i, 11c, 11i), the unidirectional plies (10c, 10i, 11c, 11i) of each intercrossing strip (4a, 4b, 4c) being oriented along their respectively associated intercrossing strip's direction, the intercrossing strips (4a, 4b, 4c) having a constant width along one of said at least three directions, the strips (4a, 4b, 4c) having a width-to-thickness ratio of 5 to 60, a minimum width of 6 mm and a thickness of 0.2 mm to 3.5 mm, the strips (4a, 4b, 4c) of equal direction being separated from each other by a distance of 3 to 10 times their width, and
- the core (3, 20) has a transverse shear modulus > 10 MPa and has between the two main surfaces a uniform thickness along the interfaces of the strips (4a, 4b, 4c) with the one of the two main surfaces over an area enclosing along each of said at least three directions respectively at least five strips (4a, 4b, 4c) of the same direction.

2. The panel (1, 13) according to claim 1,
**characterized in that** a top cover ply (5) is provided and **in that** the second composite layer (4) is between the top cover ply (5) and the core (3).

3. The panel (1, 13) according to claim 1,
**characterized in that** the shear stiff core (3) is made of a cellular material, such as metallic or composite honeycomb or the shear stiff core (3, 20) is made of a monolithic material such as foam.

4. The panel (1) according to claim 1,
**characterized in that** the core (3) is cellular with hollow cell bodies with cross-sectional dimensions of the individual hollow cell bodies being at least two times smaller than the strip width of the second composite layer (4).

5. The panel (1, 13) according to claim 2,
**characterized in that** the second layer (4) is entirely covered by the top cover ply (5) with a nominal thickness equal or less the strip thickness.

6. The panel (1) according to claim 1,
**characterized in that** between the strips (4a, 4b, 4c) of the second layer (4) the main surface of the shear stiff core (3) is covered by individual angular viscoelastic ply pieces (6).

7. The panel (1, 13) according to claim 2,
**characterized in that** the thin top cover ply (5) is made of a fibre reinforced composite material of a thermoplastic layer or elastomeric layer.

8. The panel (1, 13) according to claim 1,
**characterized in that** the open net of intercrossing strips (4a, 4b, 4c) forms equal sized meshes.

9. The panel (1, 13) according to claim 1,
**characterized in that** the strips (4a, 4b, 4c) of the second layer (4) are laid up by automatic fiber placement procedures with the following steps: g.: Providing a shear stiff core (3) with two main surfaces opposed to each other,
h.: Providing a number of M of individual unidirectional plies for a number of N intercrossing strips (4a, 4b, 4c),
i.: Placing consecutively one individual unidirectional ply respectively for each of the 1 to N intercrossing strips (4a, 4b, 4c) on one of the two main surfaces of the shear stiff core (3) and on top of any of the individual unidirectional plies of the intercrossing strips (4a, 4b, 4c) laid before, and
j.: Repeating the steps i. M-1 times till completion of the N intercrossing strips (4a, 4b, 4c).

10. The panel (1, 13) according to claim 9,
**characterized in that** the strips (4a, 4b, 4c) of the second layer (4) are laid up by automatic fiber placement procedures for a number of three intercrossing strips (4a, 4b, 4c).

11. The panel (1, 13) according to claim 1,
**characterized in that** the strips (4a, 4b, 4c) of the second layer (4) are provided with interruptions of the plies (10i, 11i) at the nodal points (8), said interruptions of continuous and interrupted plies being alternatively laid up for each strip (4a, 4b, 4c), such that interrupted plies (10i, 11i) of a strip (4a, 4b, 4c) abut against continuous plies (10c, 11c) of the intercrossing strip (4a, 4b, 4c) and only continuous plies (10c, 11c) of both intercrossing strips (4a, 4b, 4c) overlap each other.

12. The panel (1) according to claim 1,
**characterized in that** the core (3) has between the two main surfaces a constant thickness over an area enclosing along each of said at least three directions respectively at least five strips (4a, 4b, 4c) of the same direction.

13. The panel (13) according to claim 1,
**characterized in that** the structured shear stiff core (20) has a constant thickness (22) along the contacts with the strips (4a, 4b, 4c) of the second inner composite layer (4) and **in that** the structured shear stiff core (20) is provided with a blind indentation (14) at each of the mesh pockets (7) of the inner meshed layer (4) between the strips (4a, 4b and 4c).

14. The panel (13) according to claim 13,
**characterized in that** said indentations (14) have a remaining minimum thickness (21) with the ratio q of constant thickness (22) to minimum thickness (21) being 1 < q < 10.
